# EUROPEAN PATENT SPECIFICATION

(11) **EP 0 410 920 B1**
(45) Date of publication and mention of the grant of the patent: **04.05.1994**
(21) Application number: 90500066.7
(22) Date of filing: 13.07.1990
(51) Int. Cl.: F16F 9/06

(54) **Improved pneumatic spring**
Verbesserte Gasfeder
Amortisseur pneumatique amélioré

(30) Priority: 28.07.1989 ES 8902490 U
(43) Date of publication of application: 30.01.1991
(73) Proprietor: LA INDUSTRIAL PLASTICA Y METALURGICA, S.A., 01400 Areta-Llodio (Alava) (ES)
(72) Inventor: Marcos Munoz, Juan José, Lejona (Vizcaya) (ES)
(74) Representative: Carpintero Lopez, Francisco

(56) References cited:
- DE-A- 3 100 397
- DE-A- 3 231 525
- DE-C- 2 659 491
- DE-C- 2 933 590

## Description

### SPECIFICATION

### PURPOSE OF THE INVENTION

The present invention relates to a pneumatic spring, specifically of the sort used, for instance, on back doors of cars, one of the purposes thereof being to stabilise the said door at its fully open position.

### BACKGROUND OF THE INVENTION

It is a well-known fact that this type of pneumatic springs, besides being loaded with a gas, is also provided with some amount of oil, the latter designed to mix with the gas to restrict the latter's speed when going from one of the chambers defined within the cylinder by the relevant piston into the other.

Generally, although there are different solutions in such respect, the front of the piston is provided with a labyrinthine duct that is shut off with the assistance of a washer and which for instance projecting from the periphery of such piston ends at a duct of the axial bore thereof, communicating with the opposite side of the piston, so that this labyrinthine course for the fluid defines a considerable loss of load that, together with the small section thereof, make fluid transfer from one cylinder chamber to the other take place at a given volume, i.e., that the piston move with regard to the cylinder at a given speed.

There are different reasons why these pneumatic springs are always mounted so that the cylinder points down and the stem up, so that at the fully closed door position, the piston takes up a lower end position and the oil mass present inside the spring accumulates right above the said piston. This permits the oil to be in a more favourable position to go from the same to the chamber below, that increases in size as the piston rises, this meaning that the final piston travel stage will take place almost with no oil in the top sub-chamber.

Given that the speed at which air flows through a given hole is rather higher if such air is clean than if it is mixed with oil, it just so happens at the final piston travel stage that because of the absence of oil, according to the foregoing, the piston accelerates and therefore the door, that until that final rising stage was travelling smoothly, does so brusquely precisely when it should do so more slowly, i.e., when it should cushion the impact against the relevant abutment.

This problem would be solved by positioning the spring the other way round, with the body or cylinder thereof pointing downward, but this is wholly unsightly, besides posing various other problems.

To this respect German Patent No. 3.231.525 is known, which shows a gas spring wherein it is established two chambers separated by a straight plunger, means that obstruct the oil and air passage to the outside, formed by a stop fixed to the cylinder of the shock absorber, and means that fixed to the plunger serve as blockade in the passage of the oil from one part of the chamber to the other.

### DESCRIPTION OF THE INVENTION

The pneumatic spring subject of the invention has been designed to fully overcome these problems, so that it basically acts as a conventional pneumatic spring, throughout its travel and in the usual mounting position, but with the special feature that throughout its travel it retains or reserves a certain amount of oil that is automatically let off into the top cylinder chamber when the piston is at the final travel stage, i.e., when the said oil is needed most to cushion the arrest abutting or limiting position.

According to the invention this is achieved with a pneumatic spring having the structure as defined in claim 1.

More specifically, and in order to achieve the above, the invention relies on a special piston structure, which, whilst keeping the conventional labyrinthine passage or any other pressure loss system therethrough, is provided with a perimetric offset, open at the top, i.e., open in the direction of stem projection to the outside of the cylinder, while the said cylinder, at the end through which the stem projects to the outside, is provided with a collar, duly locked to the same and which can enter into the said perimetric piston offset, at a fully rising position thereof, i.e., at the position of full spring stretching.

According to this structure, when the spring is at a fully shrunk position, the oil mass shall take up a position right above the piston, and as the spring stretches, the oil shall go through to the chamber forming under the said piston, just as in any other pneumatic spring of this sort, although however, part of the oil shall remain housed in the perimetric piston offset until the latter reaches the opposite end of the cylinder, whereupon, when the piston continues to travel, the fixed collar shall enter the said perimetric offset acting as a plunger forcing the oil out, this remaining oil hence becoming operative, in so far as fluid flow through the piston is concerned, at the final travel stage thereof, where a significant oil concentration allows an especially suitable braking effect to be obtained.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:
Figure 1.- Is a side elevation and cross sectional view of a pneumatic spring according to the invention subject hereof, shown in a full stem retraction position, an initial stretching position being at the same time shown with the dotted line.
Figure 2.- Is a similar view to that of figure 1 showing the same spring in the maximum extension position thereof.
Figure 3.- Is a larger scale axial view of the piston shown in the spring of the previous figures.
Figure 4.- Is a side elevation and cross sectional view of the said piston.
Figure 5.- Is, finally, an axial view of the piston opposed to that of figure 3.

### PREFERRED EMBODIMENT OF THE INVENTION

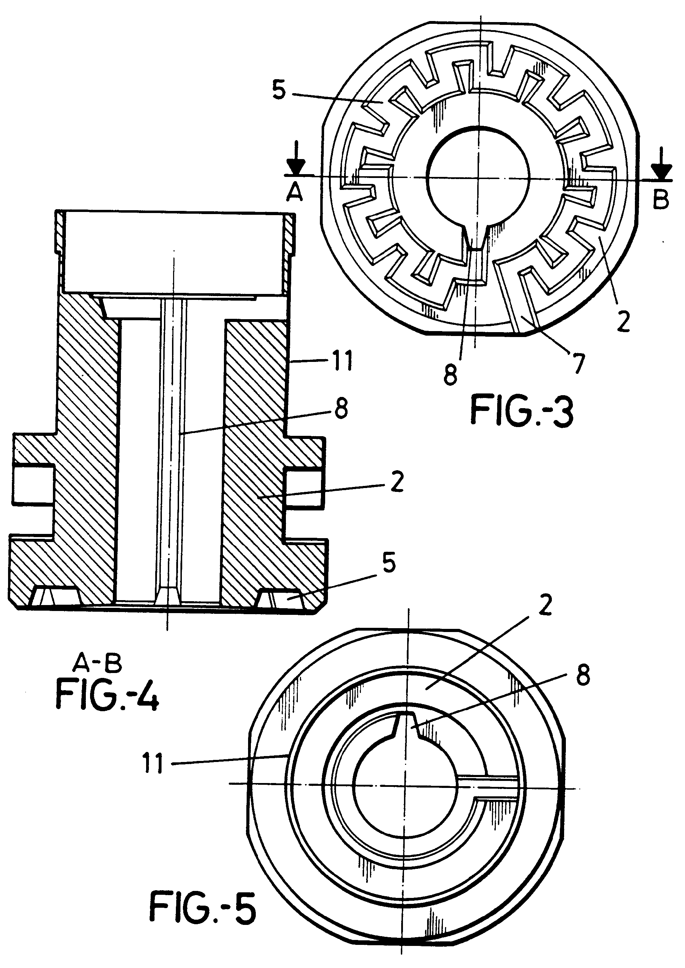

In the light of these figures it can be observed that the pneumatic spring set forth herein, just as any other conventional spring of this sort, comprises a cylinder (1) wherein plays the piston (2), to which the stem (3) is locked, this latter hermetically projecting to the outside through the relevant gasket (4), such piston (2) being fitted with communication means between the two chambers defined by both sides thereof within the cylinder (1), such as for instance, the labyrinthine duct (5) shown in figure 3, that turns into a conduit with the assistance of a washer (6) and that establishes a communication between an external inlet (7) and an internal duct (8) that goes towards the opposite piston (2) surface, as shown in turn in figure 4, such chambers being largely filled with a gas (9) which is also assisted to fill the chamber by a liquid (10), preferably oil, so that transfer of these fluids from one chamber to the other takes place with the same mixed, the oil (10) acting as means to restrict the gas (9) flow through the conduit (5).

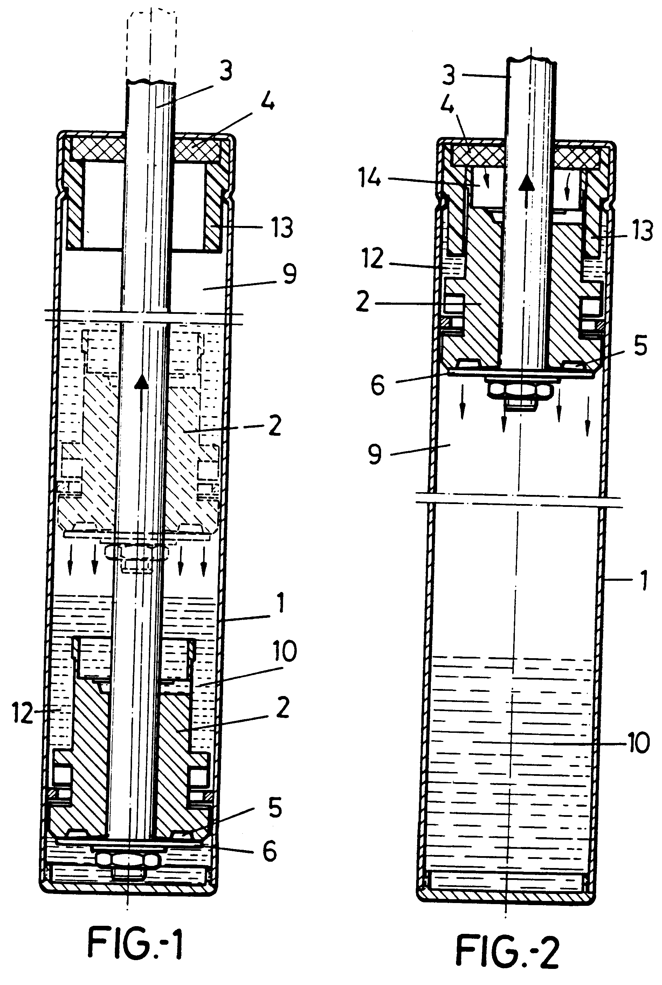

Now then, from this basic and conventional structure, the invention relies on the fact that the piston (2) is provided with a perimetric offset (11), open toward the end of such piston and pointing in the same direction as the outlet to the outside of the stem (3), as can be observed in figures 1 and 2, this perimetric offset (11) defining, with the actual cylinder (1) wall, a container (12) housing a certain amount of oil that, as can be observed in figure 2, is kept in such container up to the final piston (2) travel stage.

At this final piston (2) travel stage, where for appropriate operation of the pneumatic spring a significant amount of oil must be fed to the piston ducts, oil contained in such housing (12) is automatically let off, for which purpose and as another characteristic hereof, a collar (13) is mounted and locked at the relevant end of cylinder (1), this collar, as shown in figure 2, penetrating to the said container (12), in such full piston travel position, in turn acting as a plunger that, as indicated by the arrows in the figure, drives the oil toward the top piston chamber (14), where it shall become operative determining a braking effect derived from a flow reduction through the conduit or conduits (5), thereby representing a fairly significant cushioning at the final pneumatic spring stretching stage.

Obviously, the opposite pneumatic spring semi-cycle, where it shrinks, takes place as is usual, with the exception that at the end of the same, the perimetric offset (11) is again flooded with oil to act as the said "store" where that certain amount of oil is reserved until the new final spring stretching stage.

## Claims

1. Pneumatic spring of the type comprising the functional combination of a cylinder (1) and a piston (2) that defines two chambers in the former, communicating with each other through the actual piston (2) by means of one or more passages (5) of small section, and which is provided with a fluid consisting largely of a gas (9) and to a small extent a liquid (10), specifically oil, said spring being mounted so that its stem (3) projects upward from the cylinder (1), characterized in that the said piston (2) is provided with a perimetric offset (11), open upwardly towards the end of the cylinder through which the stem (3) projects to the outside, this offset (11) forming a container (12) with the actual cylinder side wall to store a given amount of oil, that is reserved in such container (12) for most of the upward piston travel, the upper cylinder end being provided, duly attached to the same, with a collar (13) that at the piston's full rising stage enters the perimetric container (12) defined by the piston, acting as a plunger injecting the stored oil towards the upper base of the piston from where, mixed with air, it traverses the piston (2) to reach such piston's lower sub-chamber.

## Patentansprüche

1. Verbesserte Gasfeder mit funktioneller Verbindung eines Zylinders (1) und eines Kolbens (2), der im ersten zwei Kammern definiert, die untereinander über den Kolben (2) mittels einem oder mehreren Durchgängen (5) reduzierten Querschnitts verbunden sind, welche ein Medium aufnimmt, dass sich grösstenteils aus Gas (9) und in gringerer Menge aus Flüssigkeit (10), speziell aus Öl, zusammensetzt, wobei die genannte Gasfeder so montiert wird, dass ihr Schaft (3) vom Zylinder (1) aus nach oben projektiert wird, dadurch gekennzeichnet, dass der erwähnte Kolben (2) in Richtung des Zylinderendes eine nach oben geöffnete Umfangsausnehmung (11) aufweist, durch welche der Schaft (3) nach aussen dringt; die Ausnehmung (11) bildet zusammen mit der Seitenwand des Zylinders ein Behältnis (12), in dem während des grössten Teils des Kolbenhubs eine bestimmte Ölmenge als Reserve gelagert wird; das obere Ende des Zylinders ist mit einem an demselben befestigten Bund (13) ausgestattet, der während des gesamten Kolbenhubs in das Umfangsbehältnis (12) eindringt, wo er als Kolben wirkt und das gelagerte Öl in Richtung zur oberen Basis des Kolbens einspritzt, wonach das mit Luft vermischte Öl durch den Kolben (2) strömt, bis es die untere Kammer des Kolbens erreicht.

## Revendications

1. Amortisseur pneumatique amélioré, du genre de ceux qui comportent la combination fonctionnelle d'un cylindre (1) et d'un piston (2), laquelle détermine deux chambres dans le premier, qui communiquent entre elles à travers le piston réel (2) au moyen d'un ou plusieurs pas (5) de section réduite, lequel amortisseur reçoit un fluide formé en grande partie par un gaz (9) et, dans une moindre mesure, par un liquide (10), concrètement par de l'huile, l'amortisseur en question se trouvant monté de telle manière que sa tige (3) se projette vers le haut à partir du cylindre (1), ledit amortisseur étant caractérisé par le fait que le piston (2) cité plus haut présente un rabaissement périmétrique (11) ouvert vers le haut dans la direction de l'extrémité du cylindre à travers lequel la tige (3) se projette vers l'extérieur, ce rabaissement (11) formant un récipient (12) avec la paroi latérale du cylindre, afin de stocker une certaine quantité d'huile, laquelle est gardée en réserve dans ledit récipient (12) durant la plus grande partie du parcours du piston vers le haut, l'extrémité supérieure du cylindre, dûment fixée à celui-ci, recevant une collerette (13) qui, au cours de toute la vie du piston, entre dans le récipient périmétrique (12) défini par le piston, en agissant comme un piston qui injecte l'huile stockée dans la direction de la base supérieure du piston, à partir de laquelle, l'huile mélangée à l'air traverse le piston (2), jusqu'à ce qu'elle parvienne à la sous-chambre inférieure du piston.
